# EUROPEAN PATENT APPLICATION

(11) **EP 3 096 529 A1**
(43) Date of publication of application: **23.11.2016**
(21) Application number: 15197124.9
(22) Date of filing: 30.11.2015
(51) Int. Cl.: H04N 21/431, H04N 21/475, H04N 21/4788

(54) **SYSTEM AND METHODS FOR VIDEO COMMENT THREADING**

(30) Priority: 19.05.2015 US 201562163796 P; 22.10.2015 US 201514920303
(71) Applicant: Vipeline, Inc., Jersey City, NJ 07302 (US)
(72) Inventor: BARKER, David James, Jersey City, NJ New Jersey 07302 (US); HAMILTON, Vernon Alexander, Jersey City, NJ New Jersey 07302 (US); LADKA, Peter J., Warwick, NY New York 10990 (US); WALL, Robert Emmet Christopher, Kingston, NJ New Jersey 08528 (US)
(74) Representative: Boult Wade Tennant

(57) **Abstract**

Systems, methods and computer program products are provided for threading media responses. An interactive media response interface comprises a main carousel in a default state that displays one or more media items. Selecting a media item causes the interface to visually distinguish the media item, as well as display one or more first layer media item responses on a first overlay. The first overlay is visually distinguished in accordance with the selected media item and the main carousel displays a reduced number of media items. Selecting a first layer media item response causes the interface to reposition the first overlay, visually distinguish the selected first layer media item response, and display one or more second layer media item responses on a second overlay. The second overlay is visually distinguished in accordance with the selected first layer media item response and main carousel displays a further reduced number of media items.

## Description

### CROSS REFERENCE TO RELATED APPLICATIONS

The present application is related to and includes U.S. Patent Application Serial No. 62/163,796, filed on May 19, 2015 , the entire contents of which is incorporated by reference as if set forth in its entirety herein.

### FIELD OF THE INVENTION

The invention relates generally to user commenting systems and methods. In particular, the disclosure relates to systems and methods for threading user media responses to a given media item such that a user interface visually encodes information sufficient for a user to determine the relationship between media items in a given thread.

### BACKGROUND OF THE INVENTION

When using digital products and services on Internet and other networked systems, it is common for users to leave comments in response to media items (*e.g.,* video files, audio files, text articles, etc.) presented by a content provider. For example, the video-sharing site YouTube has over a billion users that can comment on any posted video or respond to comments made by other users. Indeed, a popular media item may receive hundreds or even thousands of comments, many which can be nested within earlier made comments such that a user can maintain track of which comment a given response is referring to or otherwise associated with.

Current commenting systems favored in the art, however, have proven difficult to follow chains of comments and responses. For example, content providers may sort comments by the most popular, the most replied to, the newest, or other criteria. The approach of favoring particular comments over others causes many comments to be buried in reply chains and inhibits comments posted later in time from reaching the top of the content provider's sort, thereby preventing such responses from being seen by a greater number of users. If a user wants to find comments other than the top comments sorted by the content provider's ordering system, this can be difficult to near-impossible to accomplish depending on the number of comments.

Such commenting techniques also lead to confusing reply chains. For example, many commenting systems implement direct chains whereby subsequent new comments are placed at the end of the comment chain. Unless the user specifies to whom the reply is directed, it is not immediately clear to which comment the user is directly responding. Even commenting systems that incorporate nested comments (*e.g.,* where a reply to a comment is inserted under and off-center to the main comment chain so as to indicate a direct reply) do not always make clear as to who is replying to whom.

Straight line reply chains that nest off a single comment to save screen space are able to effectively delineate one clear layer of replies, but have many of the same problem as direct commenting chains when contemplating the display of replies to replies. Nesting comment systems that nest each comment reply are limited by the maximum width of comment display frames. If a user replies to a reply (and so on), those subsequent replies may not be reliably shown under and off-center to the previous comment to which the subsequent reply is responding, thereby making it unclear whether a reply is to the reply or if a reply to the original comment has been made. The maximum display width may be set by the content provider or limited by the display space available to a given computing device. Mobile and tablet users are acutely affected by the restrictions imposed by the smaller comment display space afforded by displays integrated into such devices.

For content providers that allow users to leave audio and/or video responses to media items, problems and drawbacks associated with existing comment systems are exacerbated. For example, to save space or to display multiple videos, content providers may display videos in thumbnail form. Even limiting display to thumbnails, however, video previews are larger than textual comments and so fewer videos can reasonably be displayed at once. Video comments also generally do not include detailed description beyond the title of the video, so determining to whom the user is replying remains a challenge. Moreover, there is no effective way to indicate the relationship between such comments beyond offsets and the nesting of thumbnails, which provides a sub-optimal experience for users navigating large comment chains.

Therefore, there exists a need for systems, methods and computer program products for media commenting that allows users to more readily follow comment chains. More particularly, there exists a need for video commenting systems, methods and computer program products that allow users to quickly, easily and visually follow reply chains while allowing for responses to specific comments.

### SUMMARY OF THE INVENTION

Embodiments of the present invention provide systems, methods and computer program products for threading media items and media item comments associated with a media item, *e.g.,* audio and/or video comments, thereby allowing users to quickly and intuitively sort through audio and/or video comments, as well as to more easily follow reply chains and to enter media item responses to media items.

Embodiments of the present invention include novel systems, methods and computer program products to select and display video responses to a media item, including displaying first video responses to the media item onto a main media carousel and further overlaying additional replies to the first video responses onto the main carousel, all while visually tying together the thread of replies and further responses thereto. When displaying multiple overlays, *e.g.,* multiple levels of a multi-level threaded comment chain, embodiments of the present invention are operative to execute program code that instructs a local processor interleave the overlays on the display device, thereby displaying more deeply threaded comments. If a user swipes across the main carousel, executing program code instructs the processor to display the main carousel in its default state. Accordingly, a user can more easily trace the comment chain back to the original media item.

According to a first aspect, a method for threading media item responses is provided. The method comprises presenting on a user computing device by a processor executing instructions contained in program code, an interactive media response interface that includes a main carousel in a default state in which the default state displays one or more media items provided by users. Selection of a media item from one or more media items causes program code executing at the processor to instruct the display device to visually distinguish the selected media item in the main carousel. Program code executing at the processor also instructs the display device to as to displaying one or more first layer media item responses to the selected media item on a first overlay on the interactive media response interface. The first overlay is visually distinguished in accordance with the selected media item and the main carousel displays a reduced number of media items.

The method continues with the processor receiving an indication of a selection of a first layer media item response from the one or more first layer media item responses. Program code executing at the processor responds by instructing the display device to reposition the first overlay, visually distinguish the selected first layer media item response, and display one or more second layer media item responses to the selected first layer media item response on a second overlay on the interactive media response interface. The second overlay is visually distinguished in accordance with the selected first layer media item response and main carousel displays a further reduced number of media items.

Further disclosed herein is an embodiment in which the first overlay is repositioned adjacent to the selected media item. In some embodiments, the second overlay is displayed adjacent to the first overlay. In still further embodiments, the first overlay and second overlay are interleaved.

In accordance with another aspect, the processor receives an indication of the selection of a second layer media item response from the one or more second layer media item responses. In response, program code instructs the processor to control the display to reposition the second overlay to the location of the first overlay, distinguish the selected second layer media item response, interleave the first overlay behind the second overlay, and display one or more third layer media item responses to the selected second layer media item response on a third overlay on the interactive media response interface. The third overlay is distinguished in accordance with the selected second layer media item response.

In some embodiments, the interactive media response interface further includes a navigational menu, an options menu, a recording control, a social media control, and/or advertising program code. In certain embodiments, the media items may be audio and/or video files. In another embodiment, the media items and media item responses are displayed as thumbnails. In other embodiments, the media items and media item responses are displayed as in-line video or in a lightbox overlay.

According to another aspect, a system for threading media item responses is provided. The system comprises a media input/output device and a media server; one or more remote media distribution servers may be provided to host media files in a distributed manner under control of the media server. The system further comprises an interactive media response interface for display on the media input/output device and having a main carousel in a default state, in which the default state includes the main carousel displaying one or more media items as links to content on the media server. A first overlay is provided for display on the media input/output device and having one or more first layer media item responses to a selected media item on the interactive media response interface, the first overlay being distinguished from the interactive media response interface and in which a selected media item is distinguished in accordance with the first overlay. The system further comprises a second overlay for display on the media input/output device and having one or more second layer media item responses to a selected media item response on the first overlay, the second overlay being distinguished from the interactive media response interface and the first overlay, in which a selected first media item response is distinguished in accordance with the second overlay.

### BRIEF DESCRIPTION OF THE DRAWINGS

The invention is illustrated in the figures of the accompanying drawings which are meant to be exemplary and not limiting, in which like references are intended to refer to like or corresponding parts, and in which:
Fig. 1 is a block diagram of a system for providing access to media items in accordance with at least one embodiment of the present invention;
Fig. 2 is a block diagram of a computer system for providing access to media items in accordance with at least one embodiment of the present invention;
Fig. 3 presents a flow diagram illustrating a method of video comment threading in accordance with at least one embodiment of the present invention;
Fig. 4 is a flow diagram illustrating a routine for displaying and selecting media items and comments to media items in a threaded manner according to one embodiment of the present invention;
Fig. 5 illustrates an interactive media response interface in accordance with at least one embodiment of the present invention;
Fig. 6 illustrates an interactive media response interface displaying a threaded first layer of responses in accordance with at least one embodiment of the present invention;
Fig. 7 illustrates an interactive media response interface threading two layers of responses in accordance with at least one embodiment of the present invention;
Fig. 8 illustrates an interactive media response interface threading a third layer of responses in accordance with at least one embodiment of the present invention;
Fig. 9 illustrates an interactive media response interface threading a fourth layer of responses in accordance with at least one embodiment of the present invention;
Fig. 10 illustrates an expanded navigational menu of an interactive media response interface in accordance with at least one embodiment of the present invention;
Fig. 11 illustrates an options menu of an interactive media response interface in accordance with at least one embodiment of the present invention; and
Fig. 12 illustrates a user interface for recording a new thread or recording new response menus in accordance with at least one embodiment of the present invention.

### DETAILED DESCRIPTION OF CERTAIN EMBODIMENTS OF THE INVENTION

Subject matter will now be described more fully hereinafter with reference to the accompanying drawings, which form a part hereof, and which show, by way of illustration, exemplary embodiments in which the present disclosure may be practiced. Subject matter may, however, be embodied in a variety of different forms and, therefore, covered or claimed subject matter is intended to be construed as not being limited to any example embodiments set forth herein; example embodiments are provided merely to be illustrative. It is to be understood that other embodiments may be utilized and structural changes may be made without departing from the scope of the present disclosure. Likewise, a reasonably broad scope for claimed or covered subject matter is intended. Among other things, for example, subject matter may be embodied as methods, devices, components, or systems. Accordingly, embodiments may, for example, take the form of hardware, software, firmware or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of example embodiments in whole or in part.

As used herein, the terms "comment" and "response" and their respective plurals are equivalent when used regarding users leaving remarks on media items.

As used herein, the terms "bottom position," "middle position," and "top position" should be given their ordinary meanings as a way to better explain the embodiments disclosed, but should be construed as approximations and otherwise not limiting the correspondingly described features to only those positions.

Provided herein are systems, methods and computer program products for presenting an interactive media response interface for managing media item comment threads. More specifically, the disclosed embodiments provide visual associations between selected media items and media item responses to allow users to more easily track comment threads and to intuitively add comments to particular layers or levels of the comment thread. The media items and media item responses may be audio files, video files, VR files, text, hyperlinks, articles, or other media.

According to a salient aspect, the systems, methods and computer program products disclosed and described herein present media item responses to a selected media item onto the interactive media response interface. Advantageously, the media item responses are visually distinguished from the main carousel of the interface and visually correlate to the selected media item, thereby visually encoding into the user interface relationships between media items and related responses, as well as responses to responses, etc. Multiple media item response layers may be displayed on the interface, with a given layer visually encoding a relationship that indicates a correspondence with the selected media item of the previous layer.

The media item response layers may further be interleaved to present such visual encoding on highly constrained display devices, *e.g.,* mobile phones, mini tablets, etc. In some embodiments, the systems, methods and computer program products may be implemented on mobile phones or tablets with smaller displays, such as those having display dimensions of 320 pixels in width. In other embodiments, the systems, methods and computer program products may be implemented on larger mobile phones or tablets having display dimensions of 375 pixels in width. In still further embodiments, the systems, methods and computer program products may be implemented on laptop or desktop monitors having display dimensions of of at least 600 pixels in width. Various embodiments are tailored to each of the display spaces.

The various processors, components, media items and program code are presented in a distributed manner across a number of physical devices. It should be noted by those of skill in the art, however, that such distribution is exemplary and not intended to be limiting. Accordingly, although various items of program code may be reference or indicated as running on a server rather than a client, such software components can be arrange for execution on a client rather than the server, or various combinations thereof.

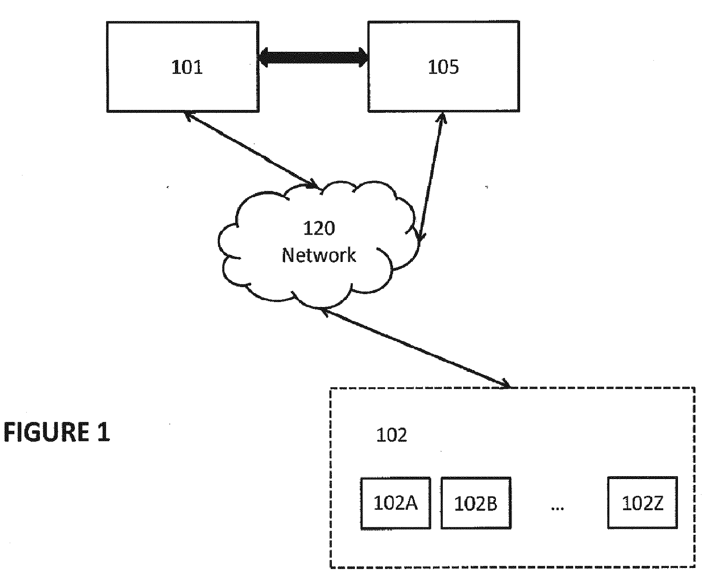

Fig. 1 presents a high-level diagram illustrating one embodiment of an exemplary configuration of a system 100 for providing media items. In one arrangement, the system 100 consists of a media server 105 that is in communication with one or more remote media distribution servers 102 (102A, 102B ... 102Z), the media server may comprise a media distribution server, or various combinations thereof. As depicted in Fig. 1, the media server 105 in some implementations can be operatively connected to one or more other electronic devices, for example, media input/output device 101.

The media input/output device 101 can be any mobile computing or electronic devices and/or data processing apparatuses capable of embodying the systems and/or methods described herein. The media input/output device 101 is exemplary and intended to represent various forms of computing devices with which a user can interact to control the media server and are capable of being in communication with the media server 105, such as a remote control device, personal computer (PC), laptop, tablet computer, personal digital assistant, mobile electronic device, smart phone device and the like. As is understood by those in the art, the remote media distribution servers 102 can be practically any computing device and/or data processing apparatus capable of communicating with the media server 105 for receiving, transmitting and storing electronic information and for providing media items as further described herein.

As would be understood by those skilled in the art, a given media distribution server 102 is operative to transmit media items to users through communications networks 120, such as the Internet, such that users can view the media items through a user interface that a media input/output device 101 presents. Users may include, but are not limited to, account holders (*e.g.,* free subscribers, paid subscribers, account holders, etc.) and/or users that do not have accounts. In this manner the media distribution servers can provide media items to practically any networked computing device (*e.g.,* media server 105, media input/output device 101 and the like).

The media server 105 comprises a computing device and/or data processing apparatus capable of communicating with the remote media distribution servers 102 for receiving, transmitting and storing electronic information, as well as communicating with media input/output device 101 for providing media items and users interfaces for interacting therewith, as is further described herein. For example, the media server 105 can include but is not limited to or personal computing devices such as a server computing device, personal computer (PC), laptop, tablet computer, personal digital assistant, mobile electronic device, smart phone device and the like. It should also be understood that the media server and/or remote media distribution servers can also be a number of networked or cloud based computing devices.

It should be noted that while Fig. 1 depicts the system for providing media items 100 with respect to a media server 105, a media input/output device 101 and remote media distribution servers 102, it should be understood that any number of such devices can interact with the system in the manner described herein. It should also be noted that while Fig. 1 is further discussed herein with respect to a user (not depicted), it should be understood that any number of users can interact with the system 100 in the manner described herein, as well as automated software processes, expert systems, automated knowledge collection systems, etc.

It should be further understood that while the various computing devices and machines referenced herein, including but not limited to the media server 105, media input/output device 101 and remote media distribution servers 102, are referred to herein as individual/single or plural devices and/or machines, in certain implementations the referenced devices and machines, as well as their associated and/or accompanying operations, features, and/or functionalities, can be combined or arranged or otherwise employed across any number of devices and/or machines, such as over a wired or wireless network connection, as is known to those of skill in the art.

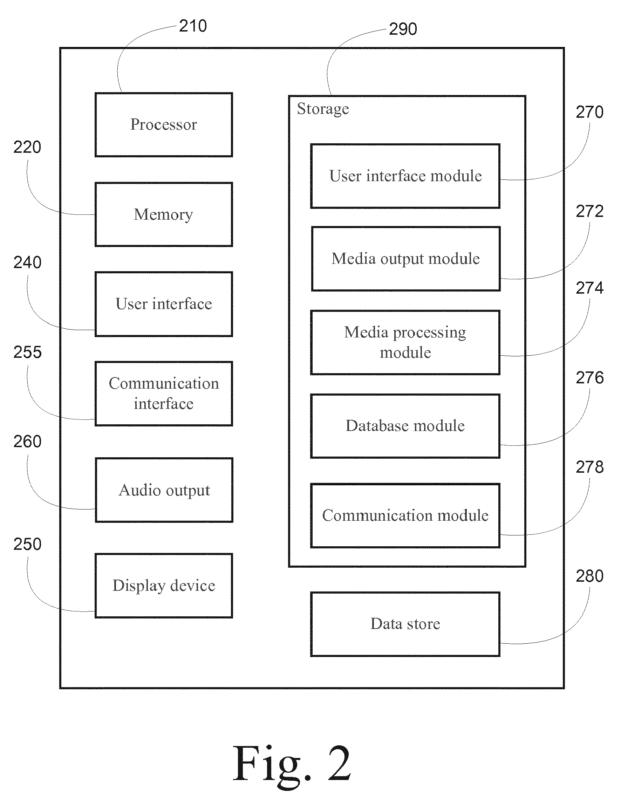

Fig. 2 is a high-level diagram illustrating an exemplary configuration of a client device, such as a media input/output device, for use in providing media items and user interfaces for threading responses to such media items. As shown, the client device comprises a processor 210, which is operatively connected to various hardware and software components that serve to enable operation of the systems and methods described herein. The processor 210 serves to execute instructions contained in program code, which instruct the processor 210 to perform various operations relating to providing related media items, selecting media items, playing media items, and incorporating user commenting on such media items in a threaded manner, as is described in greater detail below. The processor 210 can comprise multiple discrete processors, a multi-processor core, or other type of processor(s) know to those of skill in the art, depending on the particular implementation.

In accordance with certain implementations, a memory 220 and/or a storage medium 290 are accessible by the processor 210, thereby enabling the processor 210 to receive and execute program code instructions stored on the memory 220 and/or on the storage 290. The memory 220 can be, for example, a random access memory (RAM) or any other suitable volatile or non-volatile computer readable storage medium. In addition, the memory 220 can be fixed or removable. Similarly, the storage 290 can take various forms, depending on the particular implementation. For example, the storage 290 can comprise one or more components or devices such as a hard drive, a flash memory, a rewritable optical disk, a rewritable magnetic tape, or some combination of the above. The storage 290 can also be fixed or removable, as well as local to the client device or remote, for example, a cloud based storage device, or any combination of the foregoing.

One or more software modules are encoded in the storage 290 and/or in the memory 220. The software modules can comprise one or more software programs or applications having computer program code or a set of instructions executed in the processor 210. In some embodiments, included among the software modules are: a user interface module 270 that comprises program code to instruct the processor to receive user inputs from an associated user interface 240 and render information thereon; a media output module 272 that configures the system to output media items, media item responses to such media items and related information via associated output devices (*e.g.,* user interface 240, display 250, audio output device 260); a media processing module 274 that configures the system to retrieve, process and output related media items and responses to media items as further described herein; a database module 276 that comprises program code to instruct the processor to store information concerning the operation of the systems and methods described herein; and a communication module 278 that comprises program code to instruct the processor to communicate with one or more remote computing devices.

Such computer program code or instructions for carrying out operations or aspects of the systems and methods disclosed herein can be written in any combination of one or more programming languages, as would be understood by those skilled in the art. The program code can execute entirely on a media server as a stand-alone software package, partly on the media server and partly on one or more remote computing devices, such as, a media input/output device, or entirely on such remote computing devices. In the latter scenario, the various computing devices can be connected to the media server through any type of wired or wireless network, including a local area network (LAN) or a wide area network (WAN), or the connection can be made to an external computer (for example, through the Internet using an Internet Service Provider). It should be understood that in some illustrative embodiments, one or more of the software modules can be downloaded over a network to the storage 290 from another device or system via the communication interface 255. For instance, program code stored in a computer readable storage device in a server can be downloaded over a network from the server to the storage 290.

In certain embodiment, client is operative to maintain a data store 280 on the storage 290 subsystem. As is described in greater detail below, the data store 280 contains and/or maintains various data items and elements that are utilized throughout the various operations of the system for providing media items and associated user interfaces. For example, the database can contain include user information including account information. The database can also include user preferences concerning operation of the system and other settings. By way of further example, the database can also maintain a library of media items, for example, a user's personal library of digital media files (*e.g.,* music files, video files, text files, web content and the like) in various digital formats, or links to such files stored on remote or network accessible storage devices, as is understood by those of skill in the art. It should be noted that although the data store 280 is depicted as being configured locally to the client, in certain implementations the data store 280 and/or various of the data elements stored therein can be stored on a computer readable memory or storage medium located remotely and connected to client device, such as on the media server or other hardware accessible via the network (not shown).

A user interface 240 (*e.g.,* a media input/output device) is also operatively connected to the processor 210. The interface can be one or more input device(s), such as switch(es), button(s), key(s), a touch-screen, or controls as would be understood in the art of electronic computing devices. The interface serves to facilitate the capture of commands from the user as well as render responsive information for presentation to a user. For example, the interface can capture information or commands from the user concerning the media items being played, responses to the media items already stored, creation of new media item responses, user information and third-party information and preferences related to the operation of the system for providing media items, as further described herein.

A display 250 (*e.g.,* a media input/output device) can also be operatively connected to the processor 210. The display 250 includes a screen or any other such presentation device that enables the system to instruct or otherwise provide feedback to the user regarding the operation of the system for providing media items. By way of example, display 250 can be a digital display such as an LCD display, a CRT, an LED display, or other such two-dimensional display as would be understood by those skilled in the art. By way of example, the user interface 240 and the display 250 can be integrated into a touch screen UI device. Accordingly, the display is also used to show a graphical user interface, which can display various data and provide "forms" that include fields that allow for the entry of information by the user of the media server. Touching the touch screen at locations corresponding to the display of components comprising the graphical user interface allows the user to interact with the device to enter data, control functions, etc. Additionally, one or more audio output devices 260 (*e.g.,* a media input/output device) can be operatively connected to the processor 210. The audio output device 260 serves to facilitate the playing of media items having an audio component

A communication interface 255 is also operatively connected to the processor 210. The communication interface 255 can be any interface that enables communication between external devices, machines and/or elements. In certain implementations, the communication interface 255 includes, but is not limited to, a modem, a Network Interface Card (NIC), an integrated network interface, a radio frequency transmitter/receiver (*e.g.,* Bluetooth, cellular, NFC), a satellite communication transmitter/receiver, an infrared port, a USB connection, and/or any other such interfaces for connecting other computing devices and/or communication networks, such as private networks and the Internet. Such connections can include a wired connection or a wireless connection (*e.g.,* using variants of the IEEE 802.11) though it should be understood that communication interface 255 can be practically any interface that enables communication to/from the processor 210.

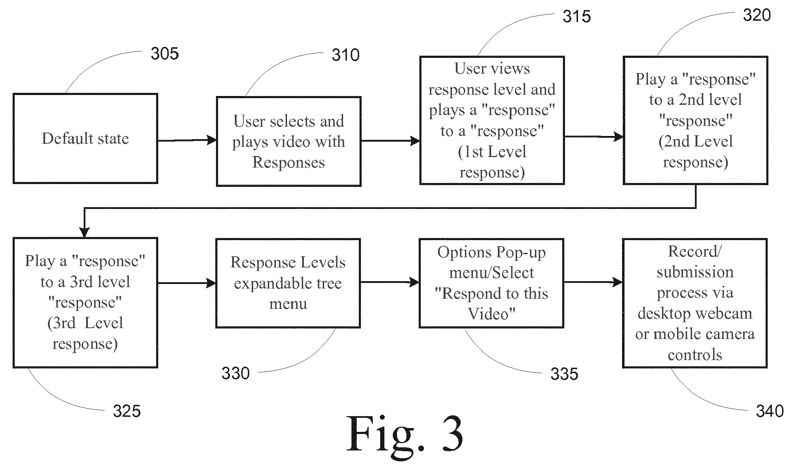

Fig. 3 presents a flow diagram illustrating a method for video comment threading 300 in accordance with at least one embodiment disclosed herein. Specifically, in one aspect, the methods of displaying media items, selecting media items, selecting media item responses to such selected media items and visually associating selected media items and media item responses are described. The process begins at step 305, in which the processor, configured by executing program code in one or more software modules (*e.g.,* the media output module, the media processing module and the database module), loads an interactive media response interface in a default state. For example, in some implementations, the configured processor displays an initial set of media items on a main carousel on the interface. In some embodiments, the processor is instructed to display the media items as videos. In addition or alternatively, the media items are displayed in audio form, text, hyperlinks, articles, or other types of media items. In yet further embodiments, the media items are presented as a thumbnail representing a given media item.

At step 310, a processor at the media server, which is configured by executing one or more of the software modules (*e.g.,* a user interface module, media output module, media processing module, etc.) receives a selection via the user interface. For example, a user can click or interact with one or more of the media items from the main carousel on the interface to select a media item. Once selection of a media item is made using the user interface, the configured processor receives the selection and can execute the corresponding instruction.

According to one embodiment, selection of a media item instructs the configured media server processor to access a media distribution server, which may be accessed over a network, to determine whether responses to the selected media item are available. For example, in some implementations, the processor, driven by program code (*e.g.,* media processing module), can identify the number of media item responses to a media item and display the media item responses on the interface. The software modules (*e.g.,* media output module, media processing module, etc.) configure the media server to access the media item responses and display one or more responses (*e.g.,* the "first layer responses") on the media input/output device. In some embodiments, the media input/output device displays the first layer responses onto a first overlay on the interface. The media output module and media processing module can instruct user interface that the media input/output device presents to reduce the number of displayed media items to accommodate the displayed first layer responses.

The processor can execute program code to access the media distribution server, which may be local or located remotely over a network, to effect playback of the media item. For example, the media output module can interpret a playback request for a video media item in some implementations to play the video in a full screen mode on devices that support full screen playback. In other implementations, the media output module interprets a playback request to play the video in a lightbox overlay.

The processor interprets program code (*e.g.,* provided by the media output module, media processing module, etc.) to visually distinguish the selected media item in the interactive display from other media items. For example, the configured processor instructs the user interface (*e.g.,* presented by the media input/output device) to highlight, color, annotate, shadow or otherwise distinguish the selected media item. In some embodiments, the processor interprets program code to visually distinguish the responses to the selected media item. For example, the processor can execute program code to instruct the user interface to highlight, color, annotate, shadow or otherwise distinguish the responses to the selected media item and/or distinguish the overlaid responses in a manner corresponding to the selected media item. In some implementations, the manner of visually distinguishing the selected media item and the responses to the media item is the same. For example, if the processor instructs the user interface to display a particular color highlighted border around the selected media item, the processor can instruct the user interface to display the same color highlighted border around the overlaid responses to the media item. It can be appreciated that the selected media item and the first layer of responses are therefore visually associated and that the user interface visually encodes such relationship to facilitate ease of interpreting information that the user interface provides.

In addition to responses to a given media item, the media distribution server can store a second layer of media item responses (*e.g.,* replies to replies). According to embodiments in which the media distribution server stores an additional layer of media item responses, at step 315 the processor, driven by program code (*e.g.,* media processing module, communication module, etc.), can access the media distribution server, which may comprise access over a network, to identify the additional available responses. Continuing with step 315, the processor, which is configured by executing one or more of the software modules (*e.g.,* the user interface module, the media output module, the media processing module, etc.) receives a selection via the user interface. For example, the user can click or interact with one or more of the first layer responses to media items from the main carousel via the interface to select a first layer response. Once the user selects a first layer response, the configured processor receives this selection and can execute the corresponding instruction.

In some embodiments, the processor is operative to identify the number of media item responses to a first layer media item response and display such responses on the user interface at the media input/output device. The software modules configure the processor to access the media item responses to a selected first layer media item response and display the one or more media item responses (*e.g.,* the second layer media item responses) on the user interface. The configured processor accesses the second layer media item responses and displays at least one of such media item responses on the user interface. In some embodiments, the second layer media item responses are displayed onto a second overlay on the user interface. In some embodiments, the media output module and media processing module instruct the media input/output device to reduce the number of displayed media items to accommodate the displayed second layer media item responses.

The processor executes program code to instruct the user interface to visually associate the selected first layer media item response with the second layer of media item responses. In some embodiments, such visual association is disparate or otherwise distinguishable from the visual association between the selected media item and the unselected first layer media item responses. For example, the processor can execute program code to instruct the user interface to highlight, color, annotate, shadow or otherwise distinguish the selected first layer media item response from other first layer media item responses.

The processor can execute program code to instruct the user interface to highlight, color, annotate, shadow or otherwise distinguish the second layer media item responses from the first layer of media item responses and the media items in the carousel. In some implementations, the manner of visually distinguishing the selected first layer media item response and the second layer media item responses is the same. For example, if the processor instructs the user interface to display a particular color highlighted border around the selected first layer media item response, the processor similarly instructs the user interface to display the same color highlighted border around the second layer media item responses to the selected first layer media item response. In some embodiments, the processor at step 315 can be configured to instruct the user interface to display the first layer media item responses in a first overlay and to display the second layer media item responses in a second overlay on the interface.

The number of response layers in a media item response thread has no set upper limit and may have as many layers as there are media item responses. As such, according to embodiments in which the media distribution server stores still additional layers of media item responses, at step 320, the processor, driven by program code, can access the media distribution server to identify the additional media item responses available in the same or similar manner as used to display the first two media item response layers. One skilled in the art can appreciate that the step of selecting a higher order media item response layer is accomplished in the same or similar way as the first two media item response layers. In some embodiments these steps comprise visually distinguishing selected media items and media item responses to the selected media items, as previously described, and comprise the optional display of each layer of media item responses on a separate overlay.

According to the present embodiment, the processor at step 320 is configured by executing one or more of the software modules to display a maximum number of media item response layers on the user interface at a given time. In some embodiments, the media item response layers are displayed on the user interface at the client as overlays. In some implementations, the maximum number of displayable media item response layers is governed by the display resolution or other limiting factors of the media input/output device. If the user accesses a response layer that requires the user interface to display more media item response layers than is permitted by the media input/output device, certain embodiments comprise tiling, interleaving, etc., the lowest order media item response layer behind any overlays that the user interface presents.

According to embodiments in which the media distribution server stores additional layers of media item responses, thereby requiring more than one overlay to be tiled or interleaved, the processor at step 325, driven by program code, accesses the media distribution server to identify the additional media item responses available, select an additional media item response from one or more additional media item responses layers, and to display the additional media item responses on the user interface. For example, this can be via an overlay in the same or similar way as the preceding steps. In some embodiments, if the user accesses a response layer that requires the user interface to display two or more response layers than is permitted by the media input/output device, the lowest and next lowest order media item response layers are tiled behind the higher order response layers.

At step 330, the processor can be configured by the software modules (*e.g.,* user interface module, media output module, database module, etc.) to display a navigational menu on the user interface that the media input/output device presents. In addition or alternatively to the preceding steps, the processor at step 335 can be configured by the software modules to display options associated with a given media item or media item response to such media items on the user interface. In some implementations, these options may include, but are not limited to, flagging, "liking" or "disliking" a media item, checking the number of media item views, sharing the media item on social media, rating the media item, responding to a particular media item, etc. Similarly, certain embodiments comprise implementing functionality for media item response recording via the media input/output device, step 340. For example, the user interface can be configured to allow users to add responses to media items or responses to media items, such as by adding a video or photo response to any selected media item at any selected response layer, including the default state.

It should be appreciated that several of the logical operations described herein are implemented (1) as a sequence of computer implemented acts or program modules running on the various devices of the system and/or (2) as interconnected machine logic circuits or circuit modules within the system. The actual implementation is a matter of design choice dependent on the requirements of the device (*e.g.,* size, energy, consumption, performance, etc.). Accordingly, the logical operations described herein are referred to variously as operations, steps, structural devices, acts, or modules. As referenced above, the various operations, steps, structural devices, acts and modules can be implemented in software, in firmware, in special purpose digital logic, and any combination thereof. It should also be appreciated that more or fewer operations can be performed than shown in the figures and described herein as well as performed by various combinations of the depicted hardware and software. These operations can also be performed in a different order than those described herein.

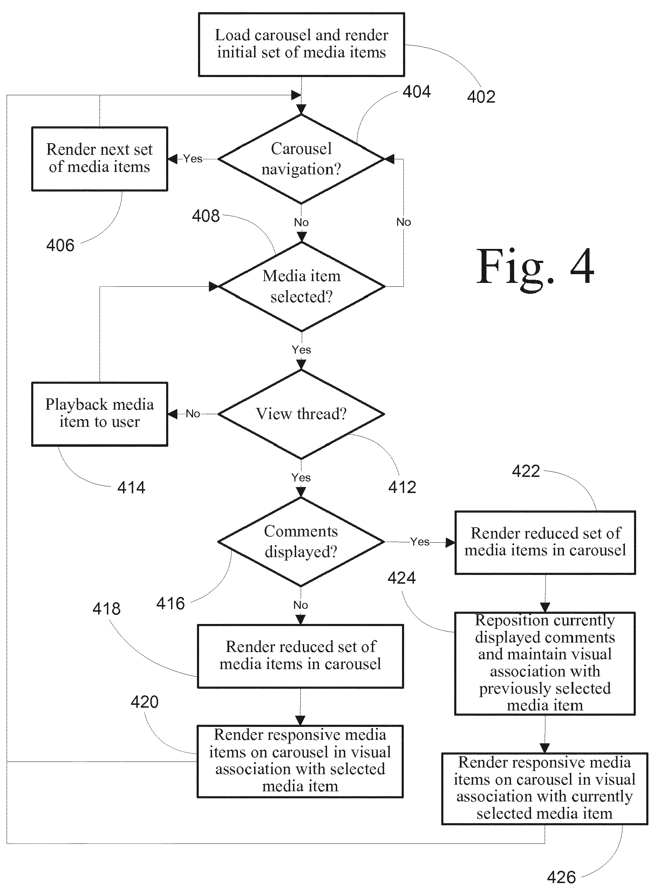

Turning now to Fig. 4, the present flow diagram illustrates a routine for displaying media items and comments to media items in accordance with at least one embodiment of the present invention. The process begins with a processor, configured by executing one or more software modules (*e.g.,* various combinations of the user interface module, media output module, media processing module, database module, communication module), loads a main carousel for display on a user interface, step 402. In some implementations, the processor is configured to render an initial set of media items in the main carousel or thumbnails thereof. For example, the media items can be videos, audio files, text, hyperlinks, or other media. In some implementations, the media items are provided by one or more remote media distribution servers.

The configured processor determines whether navigation is taking place at the carousel, step 404. In some embodiments, the main carousel in unable to render all available media items concurrently. As such, the main carousel renders only a portion or subset of all available media items. The media items rendered may be, for example, the most recently added media items, the most popular media items, media items submitted by a particular user, or any combination thereof. To access media items that are not currently displayed, a user may navigate the carousel to display different or additional media items. In some embodiments, the processor is configured to receive touch screen user input for navigation. In other embodiments, the processor is configured to receive other user input to navigate through the main carousel, such as clicks or similar interactions with navigation components on the user interface.

If the processor determines that the user is navigating the carousel, step 406, the processor executes program code to render different or additional media items in the main carousel. For example, where a user swipes across the main carousel via a touch screen, the processor can receive such input from the touch screen and instruct the user interface to step to the next page of available media items. Similarly, a user may click or interact with directional arrows, a scroll bar, or type in a page number to instruct the processor to cause the user interface to render the next set of media items.

If the processor determines that the user is not navigating the carousel, step 404, the configured processor determines whether one of the available currently presented media items have been selected, step 408. In some embodiments, the processor of the media server is configured by executing program code to receive a user selection via the user interface. For example, if a user clicks or interacts with one of the available media items, the configured processor receives this selection via the user interface and can execute the corresponding instruction. In some implementations, the selected media item is for example, highlighted, colored, annotated, shadowed, or otherwise distinguished from other media items that the main carousel is displaying.

The configured media server processor determines whether to execute one or more software modules to display the response thread of the selected media item, step 412. In some embodiments, a user clicks or interacts with a virtual control or hyperlink to have the processor execute program code to display the response thread. In other embodiments, a user clicks or interacts with the selected media item directly to have the processor execute program code to display the response thread. If the configured processor determines that there is no response thread to view or that the user has declined to view the response thread, step 412, the processor executes program code to playback the media item to the user, step 414. In other implementations, the user can click or interact with the selected media item directly to have the processor execute program code to playback the media item to the user even if the selected media item has media item responses available in a response thread.

If the user selects a media item that has a response thread, step 412, and the processor executes program code to display the selected response thread, the configured processor can determine whether to execute one or more software modules to check if a set of responses to the selected media item have been displayed on the interface, step 416. If an initial set of responses have not been displayed, the configured processor executes program code to render a reduced set of media items in the main carousel, step 418. In some embodiments, the number of media items is reduced by the amount of media item responses to be displayed. For example, if there are six media items displayed in the carousel in a 2x3 format, then the user interface reduces the set of media items that the carousel displays by one row (*e.g.,* removes two media items from the user interface).

The processor instructs the user interface to modify the manner in which it renders the carousel and executes program code to render responsive media items on the carousel in visual association with the selected media item, step 420. In some embodiments, the responses are rendered in the location where the set of media items has been reduced. In some embodiments, the responses are rendered on an overlay on the user interface. In some implementations, the responsive media items are for example, highlighted, colored, annotated, shadowed, or otherwise distinguished from the main carousel. In further implementations, the responsive media items and the selected media item are highlighted, colored, annotated, shadowed, or otherwise distinguished in the same manner as the selected media item.

Where the user interface is rendering an initial set of media item responses on a display device, step 416, the configured processor executes program code to render a reduced set of media items in the main carousel, step 422, which may be accomplished in the same or similar manner as in connection with step 418. In response, the processor executes program code to reposition currently displayed responsive media items, step 424. In some embodiments, the currently displayed media item responses are repositioned to abut the selected media item. In other embodiments, the currently displayed media item responses are repositioned in place of the reduced set of media items. In still other embodiments, the currently displayed media item responses are repositioned elsewhere on the interface. In these and other implementations, the repositioned responses maintain the visual association with the previously selected media item. For example, the repositioned responses maintain their highlight, coloring, annotation, shadowing, display or other distinguishing features on an overlay.

After modifying the position in which the responsive media items are rendered, step 424, the configured processor executes program code to render responsive media items on the carousel in visual association with the currently selected media item, step 426. In some embodiments, the currently selected media item is a response to the originally selected media item from the main carousel. In some embodiments, the responsive media items are rendered in the location where the set of media items has been reduced, which may be accomplished by rendering such media items on an overlay on the user interface. In some implementations, the responsive media items are for example, highlighted, colored, annotated, shadowed, or otherwise distinguished from the main carousel. In further implementations, the responsive media items and the selected media item are highlighted, colored, annotated, shadowed, or otherwise distinguished in the same manner, thereby maintaining the visual relationship between selected media items, media items that are responses to a selected media item, and media items that are responses to a response.

At this point in the program flow, there are one or more layers of responsive media items displayed on the user interface. The routine of Fig. 4 can loop to step 404 and reiterate for as many layers of responsive media items that are in a given comment thread, or can loop for as many media item response layers are requested or accessed by the user. As is explained in further detail herein, for each additional layer of responsive media items that is rendered beyond two layers, the lowest order displayed layer is tiled or interleaved behind the currently displayed responsive media item layers. For example, if a first layer and a second layer of responsive media items are displayed in the carousel, and the user selects a media item in the second layer to view further responses from that thread, the second layer will be repositioned to the location of the first layer and the first layer will be tiled or interleaved behind the second layer. In this manner, screen space is made available on the user interface for the new third layer. In other embodiments, in which the screen resolution is greater and additional or a greater number of layers of media items can be displayed, the process of tiling lower ordered response layers occurs after more iterations of this process (*e.g.,* if three layers can be displayed on a display device, then the first layer will be tiled upon selection of a third layer media item response to render a fourth layer of media items).

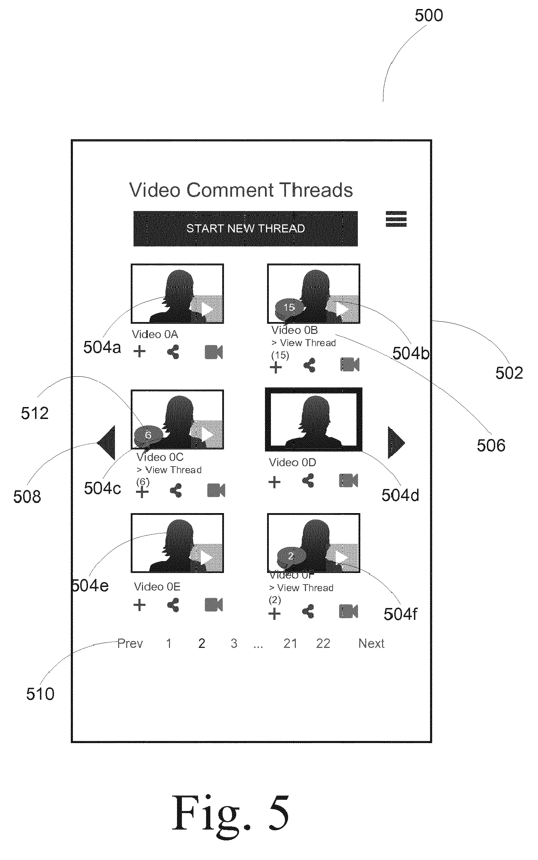

Figs. 5 through 12 illustrate exemplary embodiments of user interfaces operated and rendered in accordance with embodiments of the method of the present invention. It is to be understood that these embodiments can be practiced separately, in concert with one another, or with any other embodiments disclosed herein. The media items described herein optionally may be videos, audio files, text, hyperlinks, articles, or other media. For example, the figures disclosed herein depict media items as videos that are displayed as thumbnails. This disclosure makes reference to media items or media item responses interchangeably as "videos" to provide a specific example, but the methods and systems herein apply equally to other media item response systems, such as text or audio responses.

Fig. 5 illustrates an interactive media response interface 500 according to one embodiment of the present disclosure; specifically the presentation of the interface for devices with limited or otherwise constrained display dimensions. The interface 500 includes a main carousel 502 in a default state rendering thumbnails for one or more media items 504a, 504b, 504c, 504d, 504e and 504f in the main carousel. By way of example, each media item 504 in the default state has been titled "Video 0A" through "Video 0F" to indicate that in this embodiment, this is the base layer of the interface (*e.g.,* the carousel is identified as layer 0). The number of media items in the carousel can vary with the pixel width and height of the display. The illustrated display, for example, is operative to display six video thumbnails (referred to herein solely as "videos" for convenience) on the main carousel 502 of the interface 500. Media items that have media item responses associated with such media items are noted by a response link 506. For example, Fig. 5 depicts a response link 506 below Video 0B stating "> View Thread (15)," which indicates that there are fifteen media item responses threaded to that video. In other embodiments, available media item responses are denoted in other ways, such as by notification, text link, or other alert, including the use of graphical alerts 512 to indicate the number of available responses.

A user can scroll through all available videos in the carousel by using the scroll arrows 508, the pagination menu 510, or by swiping left or right if the device is responsive to a user touch input. The interface 500 may optionally include advertisements, such as banner ads delivered through an advertising module that are customized for the delivery medium (*e.g*., mobile phones, tablets, desktops, laptops, etc.).

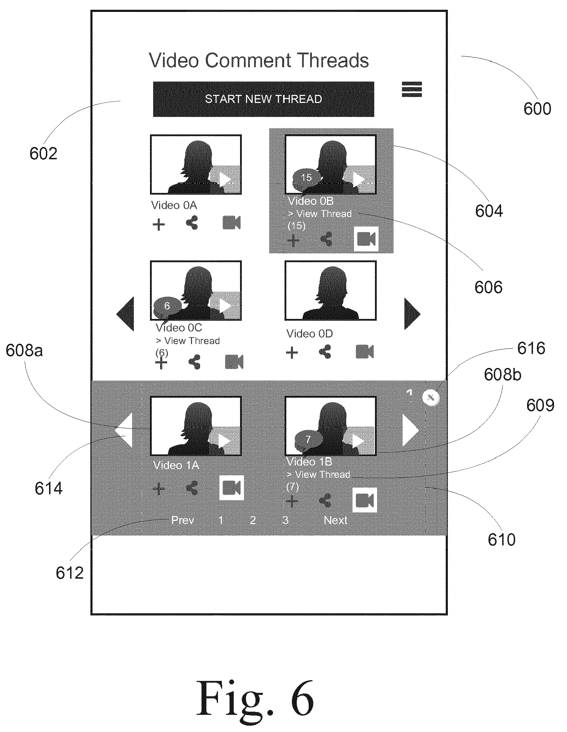

Fig. 6 depicts an interactive media response interface 600 in a first media item response layer state. A user may select a given media item 604 in a manner appropriate for the device (*e.g.,* by tapping it with a finger or stylus on a phone or tablet, or using an external input device such as a mouse) and the video expands to a full screen mode on devices that support full screen playback. If the device does not support full screen playback, the video may load in a lightbox overlay. If users have submitted responses to available videos, a notification, text link, or other alert is displayed near the video, such as a response link 606.

In this embodiment, a user selects a comment thread for a given media item 604 by selecting the response link 606. In response to selection of a media item 604, the media item may, for example, be highlighted, colored, annotated, shadowed or otherwise distinguished from unselected media items in carousel 602. In Fig. 6, Video 0B has been selected and is shown with a highlighted border. Upon selection of the media item 604, a first layer of media item responses 608 (608a and 608b) are rendered by the processor for display on the interface 600. In some embodiments, the number of media items 604 in the carousel are reduced and the first layer of media item responses 608a and 608b are rendered and displayed on a first overlay 610.

In the present embodiment, the first overlay 610 renders on the interface 600 and conceals a portion of the originally displayed media items in the main carousel 602 (located in a "bottom position" of the interface 600 as shown by example in Fig. 6). An overlay in this position is the "active layer," meaning it is the highest currently selected layer. The overlay layer's order is optionally located on the overlay (*e.g.,* the first overlay 610 has an order of "1"). One or more first layer media item responses 608a and 608b are rendered on the overlay 610 with a pagination menu 612. Like the media items 604 in the carousel 602, the media item responses 608 are media items such as videos, audio files, text, hyperlinks, articles, or other media. A given media item response that has further user comments to that specific response has a corresponding first layer response link 609.

The first layer response link 609 functions in an analogous manner as the response link 506 described in connection with the embodiment of Fig. 5, except that the first layer response link 609 only includes responses to that particular response (*e.g.,* seven responses to Video 1B), and not all responses to the originally selected media item. To encode the relationship between the selected media item responsive media items, the overlay 610 is highlighted, colored, annotated, shadowed, or otherwise distinguished from the main carousel in the same manner as the selected media item 604. For instance, a particular color highlight may be applied to both the border of the selected media item and the overlay 610.

A user may scroll through all available media item responses 608 in the layer 610 by using the response scroll arrows 614, the pagination menu 612, or by swiping left or right if the device is responsive to user touch input. If the user wishes to remove the overlay 610 and associated media item responses 608 to return to the default state, the user can select a close icon 616 located on the overlay. The user can also optionally return to the default state by swiping to the left or right in the main carousel 602. In either case, the overlay 610 the processor executes instruction to remove the overlay 610 from the interface 600 and the particular media items that were concealed are again visible.

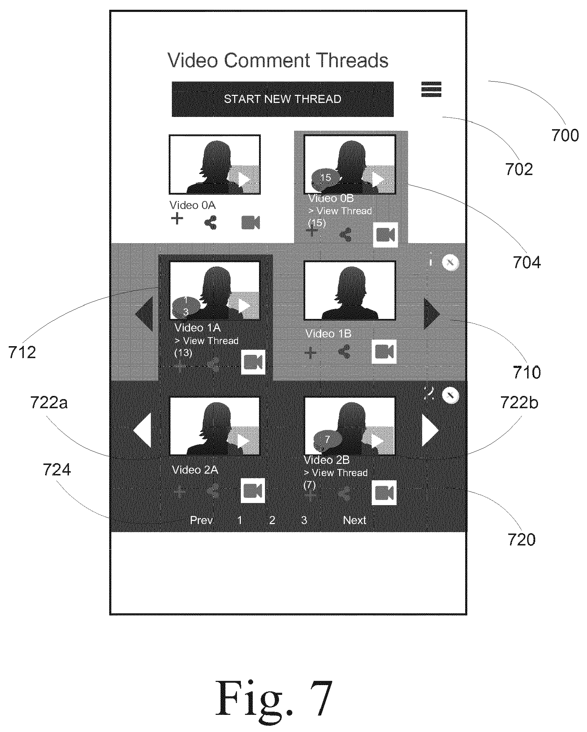

Fig. 7 depicts an interactive media response interface 700 in a second layer state with the processor rendering two layers of media item responses as two overlays on the carousel. As is shown by the diagram, the user has initially selected a media item 704 in the carousel 702 ("Video 0B") and then has selected the media item response 712 ("Video 1A"). A first overlay 710 is repositioned in the main carousel 702 to further conceal an additional number of originally displayed media items 704 (located in a "middle position" of the interface 700 as shown by example in Fig. 7). In the present embodiment, the overlay 710 is now adjacent to Video 0B, the originally selected media item 704. In other embodiments, however, the overlay 710 is not required to abut the selected media item, as some display resolutions may be large enough to encompass more media items 704 than the six shown in the exemplary diagrams, and therefore have the display space to present more response layers than shown by the present embodiments.

Fig. 7 further illustrates a second overlay 720 on the interface 700. The second overlay 720 is located in the position previously occupied by the first overlay 710 (the "bottom position" of the interface 700). One or more second layer media item responses 722 (722a and 722b) are displayed on the overlay 720 and the pagination menu is also transferred to the overlay 720. As with other media items, a given second layer media item response that has further user comments to that response will have a corresponding second layer response link 724. As in the first layer, the second layer response link 724 includes responses to that particular response (*e.g*., seven responses to Video 2B).

The second overlay 720 is highlighted, colored, annotated, shadowed, or otherwise distinguished from the main carousel in the same manner as the selected media item response 712. For instance, a particular color highlight may be applied to both the border of the selected media item response 712 and overlay 720 comprising second layer media item responses. In some embodiments, the highlighting of the second overlay 720 and selected media item response 712 is disparate or otherwise distinguishable from the highlighting of the first overlay 710 and selected media item 704, as shown in Fig. 7. The contrast in the overlay highlighting to the main carousel 702 allows a user to quickly and easily follow a particular comment chain in a response thread to an original video or other media item. In this way, the layers of responses are tiled and a user has a visual representation of which layer the current response is at, as well as a visual depiction of the responses from which the current response originated.

As with the main carousel 702 and the first overlay 710, a user may scroll through available second layer media item responses 722 by using the response scroll arrows, the pagination menu, or by swiping left or right if the device is responsive to a user's touch. As with a previous layer, if the user wishes to close the current layer and return to the previous layer, the user can select the second layer close icon or swipe left or right across the first overlay 710. These steps, however, will only close the second layer overlay 720 and corresponding media item responses, effectively returning the interface 700 to a first layer state as illustrated by the embodiment in Fig. 6. If the user wishes to remove both overlays and return to the default state, the user can select the first layer's close icon or swipe left or right across the main carousel 702, which causes the processor to execute program code instructing the interface to return to its default state.

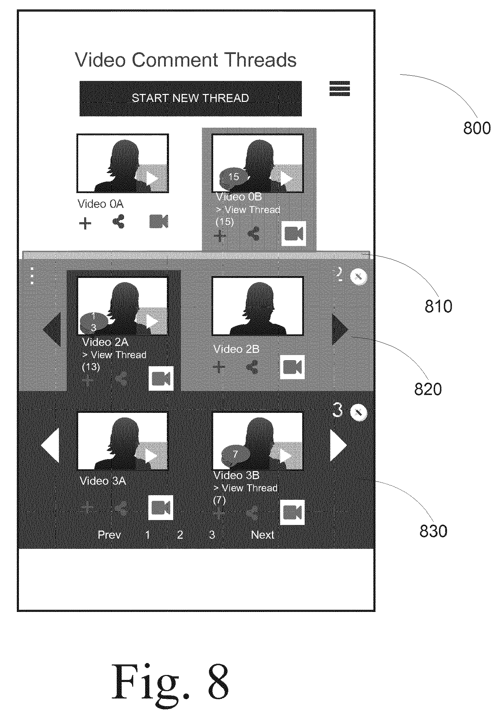

Fig. 8 depicts an interactive media response interface 800 in a third layer state with interleaved media item response layers. As in the previously described embodiments, the preceding current overlay (*e.g.,* the second overlay 820) is repositioned to the location of the overlay of the prior layer (*e.g.,* to the "middle position" where the first overlay 810 was located in Fig. 7). An additional third overlay 830 is then rendered where the second overlay was previously positioned in the user interface (*e.g.,* the "bottom position"). In this exemplary embodiment, however, the first overlay is not repositioned further upward into the interface 800, but rather the first overlay 810 is tiled behind the second overlay 820 at the middle position along an axis approximately perpendicular to the plane of the overlays (*e.g.,* along a "depth" axis). Accordingly, the first overlay is interleaved behind the second and third overlays.

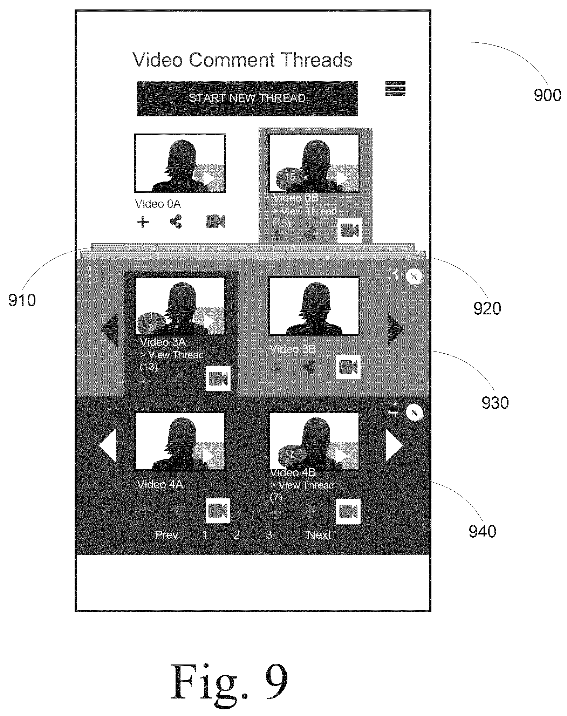

Fig. 9 depicts an embodiment in which an interactive media response interface 900 is in a fourth layer state with two layers of interleaved overlays. Here, a fourth overlay 940 is now active in the "bottom position," and the third overlay 930 has been shifted to the middle position. The second overlay 920 is tiled in front of the first overlay 910, but both are tiled behind the third overlay 930. In this way, the first, second, and third overlays are interleaved. In certain embodiments, the interface 900 limits the number of tiled overlays to three. In other embodiments, particularly those in which the interface 900 has higher resolution or substantial display space in which to render itself, the number of tiled overlays can be greater. Even in accordance with those embodiments in which the number of tiled overlays are limited, the interface can continue to open higher response layers so long as there are media item responses at those higher layers. When a new response layer is accessed, but the tile overlay limit has been reached, the lowest displayed overlay layer is hidden, but still accounted for, *e.g.,* by the processor storing a pointer to the data in memory for access when requested by the user or a software processes requiring such information.

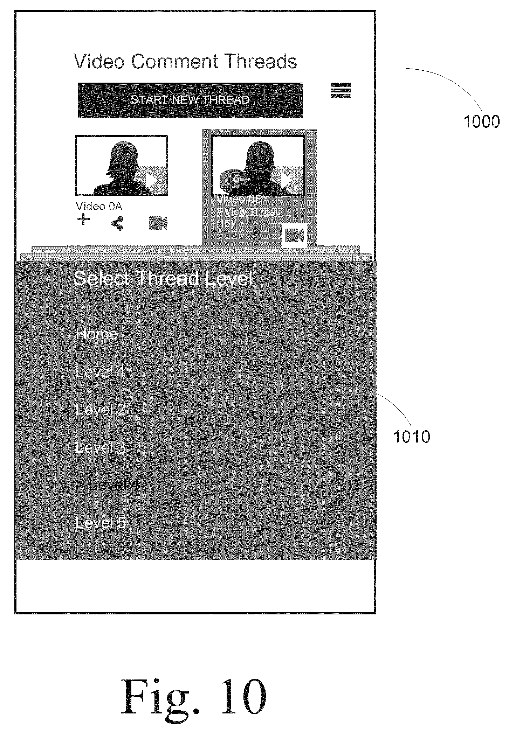

Fig. 10 illustrates an embodiment in which an interface 1000 has a navigational menu 1010 for navigating through open media item response layers. In the embodiment of Fig. 10, the navigational menu 1010 is in an expanded form for the configuration of four media item response layers as was described in the embodiment of Fig. 9. While the navigational menu 1010 is expanded, the main content thread layers are suppressed, but are not closed. A user can then select any currently open response layer to place the selected layer in the bottom position. The currently active layer may be optionally highlighted, as shown in Fig. 10. If the user selects a portion of the navigational menu 1010 that does not include a layer designation while the navigational menu is in this expanded state, the navigational menu collapses and returns the user to the previous active layer state.

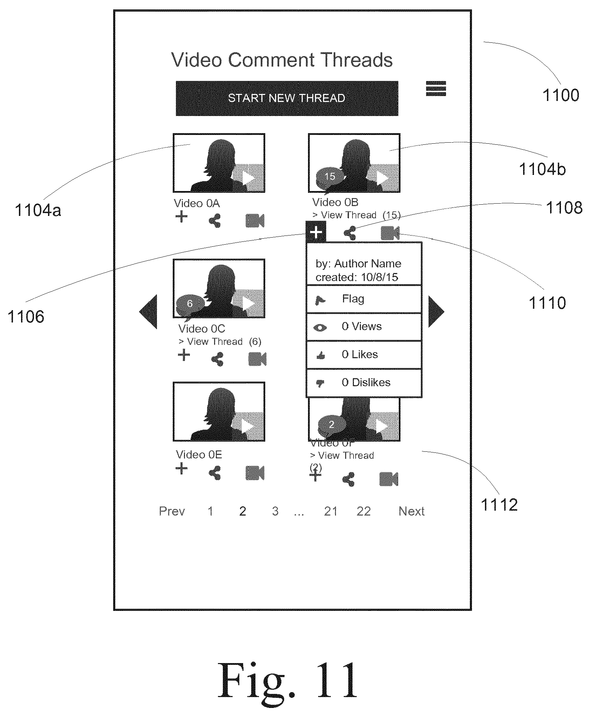

In some embodiments, the user may select options affiliated with a given media item or response to such media item. These options can include, for example, flagging, liking, or disliking a media item, checking the number of media item views, sharing the media item on social media, rating the media item, viewing authorship and timestamp information, responding to a particular media item, etc. Fig. 11 illustrates an interactive media response interface 1100 rendering media items, *e.g.,* 1104a and 1104b, in the main carousel 1102 with three such options menus. The options pop-up menu 1106 is shown in an expanded state and the information and options provided therein correspond directly to the selected media item 1104b. The social media control 1108 allows users to share the media item 1104b with social networking sites such as Twitter or Facebook, or to share via a hyperlink. The record response control 1110 allows a user to add a response video, photo or other type of media item to the particular media item 1104. In this manner, the user can add to the comment chain at a particular location in the thread. In some embodiments, the options pop-up menu 1106, social media control 1108, and record response control 1110 are displayed under each media item 1104 in the main carousel 1102 and under any displayed media item responses in a given media item response layer.

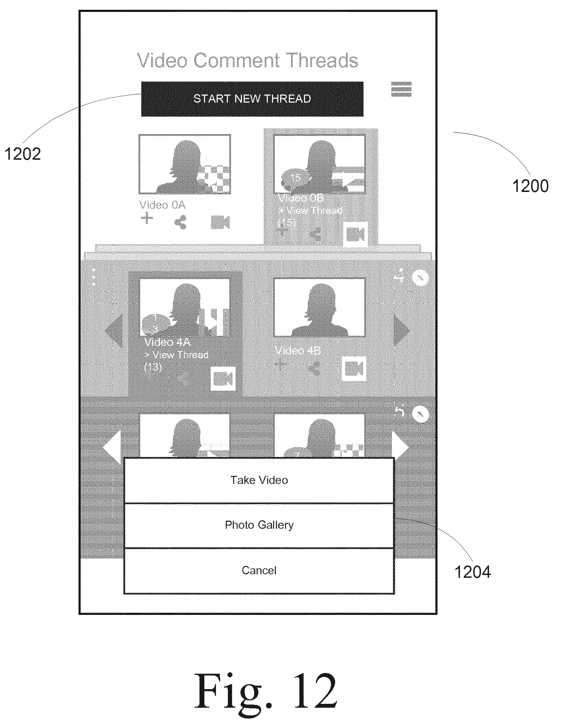

Fig. 12 illustrates an embodiment for creating new response threads via interactive media response interface 1200. A user selects the new thread control 1202 which causes the processor to render a menu 1204 on the user interface. The menu 1204 comprises options for creating a new media item to which other users can create responses. As shown in Fig. 12, a user can create a new thread with video or pictures, but other media item response can be created using the disclosed embodiments, such as audio, text or other media threads.

Notably, the figures and examples above are not meant to limit the scope of the present invention to a single embodiment, as other embodiments are possible by way of interchange of some or all of the described or illustrated elements. Moreover, where certain elements of the present invention can be partially or fully implemented using known components, only those portions of such known components that are necessary for an understanding of the present invention are described, and detailed descriptions of other portions of such known components are omitted so as not to obscure the invention. In the present specification, an embodiment showing a singular component should not necessarily be limited to other embodiments including a plurality of the same component, and vice-versa, unless explicitly stated otherwise herein. Moreover, applicants do not intend for any term in the specification or claims to be ascribed an uncommon or special meaning unless explicitly set forth as such. Further, the present invention encompasses present and future known equivalents to the known components referred to herein by way of illustration.

The foregoing description of the specific embodiments will so fully reveal the general nature of the invention that others can, by applying knowledge within the skill of the relevant art(s) (including the contents of the documents cited and incorporated by reference herein), readily modify and/or adapt for various applications such specific embodiments, without undue experimentation, without departing from the general concept of the present invention. Such adaptations and modifications are therefore intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance presented herein, in combination with the knowledge of one skilled in the relevant art(s).

While various embodiments of the present invention have been described above, it should be understood that they have been presented by way of example, and not limitation. It would be apparent to one skilled in the relevant art(s) that various changes in form and detail could be made therein without departing from the spirit and scope of the invention. Thus, the present invention should not be limited by any of the above-described exemplary embodiments, but should be defined only in accordance with the following claims and their equivalents.

## Claims

1. A method for threading media responses comprising:
presenting, by a processor executing code, an interactive media response interface having a main carousel in a default state on a user computing device, the default state having one or more media items provided by users;
selecting a media item from one or more media items;
visually distinguishing, by the processor, the selected media item in the main carousel;
displaying, by the processor, one or more first layer media item responses to the selected media item on a first overlay on the interactive media response interface wherein the first overlay is visually distinguished in accordance with the selected media item, and displaying a reduced number of media items in the main carousel;
selecting a first layer media item response from the one or more first layer media item responses;
repositioning, by the processor, the first overlay;
visually distinguishing, by the processor, the selected first layer media item response; and
displaying, by the processor, one or more second layer media item responses to the selected first layer media item response on a second overlay on the interactive media response interface wherein the second overlay is visually distinguished in accordance with the selected first layer media item response and displaying a further reduced number of media items in the main carousel.

2. The method according to claim 1 wherein distinguishing the selected media item or selected media item response is selected from the group consisting of highlighting, coloring, annotation, or shadowing.

3. The method according to claim 1 or 2 wherein a given overlay is selected from the group consisting of highlighted, colored, annotated, or shadowed.

4. The method according to any preceding claim wherein repositioning the first overlay comprises repositioning the first overlay adjacent to the selected media item.

5. The method according to any preceding claim wherein displaying the second overlay comprises displaying adjacent to the first overlay.

6. The method according to any of claims 1 to 4 further comprising interleaving the first overlay and second overlay.

7. The method according to any preceding claim further comprising:
selecting a second layer media item response from the one or more second layer media item responses;
repositioning the second overlay to the location of the first overlay;
distinguishing the selected second layer media item response;
interleaving the first overlay behind the second overlay;
displaying one or more third layer media item responses to the selected second layer media item response on a third overlay on the interactive media response interface, wherein the third overlay is distinguished in accordance with the selected second layer media item response.

8. The method according to claim 7, comprising displaying a further reduced number of media response items in the main carousel.

9. The method of claim 1 wherein the presenting one or more media items comprises presenting thumbnails of audio and/or video files.

10. The method of any preceding claim wherein presenting the interactive media response interface comprises one or more of: presenting a navigational menu; presenting an options menu; and presenting a recording control.

11. The method of any preceding claim wherein presenting the interactive media response interface comprises one or more of: presenting a social media control; and presenting at least one advertisement.

12. The method of any preceding claim comprising the step of swiping across the main carousel to return the interactive media response interface to the default state.

13. The method of any preceding claim further comprising the step of swiping across an overlay to close all higher level overlays.

14. The method of any preceding claim comprising rating the media item or the media item responses.

15. A system for threading media responses comprising:
a media input/output device;
a media server;
an interactive media response interface for display on the media input/output device and having a main carousel in a default state, the main carousel displaying one or more media items in the default state as links to content on the media server;
a first overlay for display on the media input/output device and having one or more first layer media item responses to a selected media item on the interactive media response interface, the first overlay being distinguished from the interactive media response interface and wherein a selected media item is distinguished in accordance with the first overlay; and
a second overlay for display on the media input/output device and having one or more second layer media item responses to a selected media item response on the first overlay, the second overlay being distinguished from the interactive media response interface and the first overlay, wherein a selected first media item response is distinguished in accordance with the second overlay.
